# EUROPÄISCHE PATENTANMELDUNG

(11) **EP 3 133 719 A1**
(43) Veröffentlichungstag der Anmeldung: **22.02.2017**
(21) Anmeldenummer: 15181230.2
(22) Anmeldetag: 17.08.2015
(51) Int. Cl.: H02K 1/24, H02K 1/30, H02K 15/02

(54) **ROTOR EINER SYNCHRONEN RELUKTANZMASCHINE**

(71) Anmelder: Siemens Aktiengesellschaft, 80333 München (DE)
(72) Erfinder: Fischer, Ralf, 90419 Nürnberg (DE); Reinhard, Markus, 91207 Lauf (DE)

(57) **Zusammenfassung**

Die Erfindung betrifft einen Rotor (7) einer synchronen Reluktanzmaschine (1) mit einem axial laminierten Blechpaket, wobei jedes Blech dieses Blechpaket eine anisotrope Struktur mit Ausbildung von Flusssperren (11) und Flussleitabschnitten (10) bildet, wobei sich in Umfangsrichtung betrachtet magnetische Vorzugsrichtungen, d.h. Richtungen mit geringem magnetischen Widerstand (d-Achsen) mit Richtungen abwechseln, die einen vergleichsweise hohen magnetischen Widerstand (q-Achsen) aufweisen, wobei zumindest einige Bleche zusätzliche Ausnehmungen (12) aufweisen um über geeignete flexible Verzurrmittel (16) die Fliehkraftbeanspruchungen im Betrieb der synchronen Reluktanzmaschine.

## Beschreibung

Die Erfindung betrifft einen Rotor einer synchronen Reluktanzmaschine, ein Verfahren zur Herstellung eines derartigen Rotors und die Verwendung einer synchronen Reluktanzmaschine mit einem derartigen Rotor.

Reluktanzmaschinen erweisen sich als alternative Antriebe zu den bisher üblichen Asynchronmaschinen mit Käfigläufern. Bauartbedingt weisen diese Reluktanzmaschinen eine Rotorstruktur auf, die durch flussleitende Abschnitte und flusssperrende Abschnitte gekennzeichnet ist. Dabei werden im Blech des Rotors die Teile, die den magnetischen Fluss behindern sollen, ausgestanzt und mit amagnetischen Materialien aufgefüllt oder einfach so belassen. Die flussleitenden Teile des Rotors bilden in ihrer Form den Verlauf des magnetischen Feldes im Rotor nach. Die dabei zum Teil mechanisch filigranen Strukturen der einzelnen Bleche erschweren einen Betrieb einer derartigen Reluktanzmaschine ab einer gewissen Achshöhe bei höheren Drehzahlen. Aufgrund des mathematischen Zusammenhangs von Drehzahl und Radius (F = m ω² r) treten dort verstärkt Fliehkräfte auf, die konstruktionsbedingt vom Rotor und den einzelnen Blechen des Rotors nicht aufgenommen werden können.

Bisher wurde versucht in diese filigranen flussleitenden Strukturen mechanische Hilfe innerhalb der Flusssperren anzuordnen, indem dort Stege innerhalb der Blechstruktur des Rotors ausgebildet sind. Nachteilig dabei ist, dass diese Stege aus dem magnetisch leitfähigen Elektroblech des Rotors gefertigt sind, aber sich eigentlich in einem Bereich befinden, der den magnetischen Fluss nicht leiten soll. Dadurch wird die Effizienz der Maschine verringert.

Ausgehend davon liegt der Erfindung die Aufgabe zugrunde, eine alternative Struktur eines Rotors einer synchronen Reluktanzmaschine zu schaffen, der auch bei größeren Drehzahlen und/oder höheren Achshöhen eine ausreichende Fixierung des Blechpakets des Rotors gewährleistet.

Die Lösung der gestellten Aufgabe gelingt durch einen Rotor einer synchronen Reluktanzmaschine mit einem axial laminierten Blechpaket, wobei jedes Blech dieses Blechpaket eine anisotrope Struktur mit Ausbildung von Flusssperren und Flussleitabschnitten bildet, wobei sich in Umfangsrichtung betrachtet magnetische Vorzugsrichtungen, d.h. Richtungen mit geringem magnetischen Widerstand d-Achsen mit Richtungen abwechseln, die einen vergleichsweise hohen magnetischen Widerstand q-Achsen aufweisen, wobei zumindest einige Bleche zusätzliche Ausnehmungen aufweisen um über geeignete flexible Verzurrmittel die Fliehkraftbeanspruchungen im Betrieb der synchronen Reluktanzmaschine aufzunehmen.

Die Lösung der gestellten Aufgabe gelingt ebenfalls durch ein Verfahren zur Herstellung eines derartigen Rotors als auch durch eine Verwendung eines Rotors bei einer synchronen Reluktanzmaschine.

Erfindungsgemäß wird nunmehr vorgeschlagen, die Fliehkräfte bzw. die Fliehkraftbeanspruchungen im Betrieb der synchronen Reluktanzmaschine statt mit starren Blechstreben mit einer im wesentlichen axial verlaufenden Verzurrung aufzunehmen. Dabei sind zumindest an einigen Blechen des Blechpakets an vorgegebenen Stellen, vorzugsweise an der Kante zumindest einiger Flusssperren Ausnehmungen vorgesehen.

Die Ausnehmungen können vorteilhafterweise auch als Öse ausgeführt sein. Diese Ausnehmungen, die auch wannenförmig, z.B. als Ausbuchtung an der Kante einer Flusssperre ausgebildet sind, dienen zur Führung eines im wesentlichen axial verlaufenden Verzurrmittels, wie z.B. Drähten aus Metall oder Verbundwerkstoffen, die eine hohe Zugkraft gewährleisten aber magnetisch nicht leitend sind.

Als Verzurrmittel kommen ebenfalls Drähte aus Teflon oder Kohlefaser in Betracht, genauso wie Fäden aus Kohlennanoröhrchen.

Durch den erfindungsgemäßen Aufbau lassen sich nunmehr die Bleche des Rotors verzurren und/oder fixieren. Damit lassen sich erfindungsgemäß die Fliehkräfte innerhalb des Blechpaketes des Rotors im Betrieb der synchronen Reluktanzmaschine auch bei höheren Drehzahlen und/oder vergleichsweise größeren Achshöhen des Rotors aufnehmen.

Die Herstellung eines derartigen Bleches ist vergleichsweise einfach, da die Stanzwerkzeuge derartige Ausnehmungen oder Ösen in einfacher Art und Weise bilden können, ohne dass ein weiterer Arbeitsschritt bei der Blechbearbeitung notwendig ist. Ebenso lassen sich diese Bleche durch Lasern herstellen - auch dieses ist verhältnismäßig einfach durchzuführen.

Je nach Drehzahl und Achshöhe des synchronen Reluktanzmotors, sind pro Flusssperre eines Segments, zumindest eine Ausnehmung vorgesehen. Wobei als Segment der Bereich zwischen zwei benachbarten d-Achsen in Umfangsrichtung zu betrachten ist, in dem sich Flusssperrabschnitte und Flussleitabschnitte in radialer Richtung abwechseln.

Sind mehrere Flusssperren innerhalb eines Segments vorgesehen, können dabei auch eine oder mehrere Flusssperren - aber nicht alle - ohne Ausnehmungen bzw. Ösen ausgeführt sein. Für Flusssperren ohne Ausnehmungen bzw. Ösen eignen sich herstellungsbedingt eher die radial äußeren Flusssperren.

Bei besonders hohen Fliehkraftbeanspruchungen sind vorzugsweise eher die äußeren Flusssperren mit Ausnehmungen bzw. Ösen versehen, da dort die Verzurrung am besten die Fliehkräfte aufnehmen kann.

Eine Verzurrung erfolgt nunmehr in axialer Richtung innerhalb eines Segments und einer Flusssperre wobei Wechsel innerhalb einer Flusssperre durch ein oder mehrere axial zwischengeschaltete Bleche gebildet sind, die keine Ausnehmungen bzw. Ösen oder keine belegten Ausnehmungen bzw. Ösen aufweisen. Diese Bleche werden dann auch als Zwischenbleche bezeichnet.

Durch das "Zwischenschalten" dieser Bleche lassen sich zu geringe Biegeradien der Verzurrmitteln vermeiden. Ein Wechsel von einem Segment zum benachbarten oder gegenüberliegenden Segment oder auch innerhalb eines Segments von einer Flusssperre zur anderen lässt sich nur jeweils durch einen Wechsel an der Stirnseite des Rotors durchführen.

Es finden somit Positionswechsel der Verzurrmittel jeweils nur innerhalb dieser axial verlaufenden Flusssperren statt. Jede Flusssperre hat, soweit überhaupt belegt, seine eignen Verzurrmittel, die über eine axiale Länge betrachtet nur in dieser einen Flusssperre verlaufen. Durch Umlenkung an den Stirnseiten des Rotors wird - sofern vorgesehen - das Verzurrmittel in einer anderen Flusssperre des gleichen oder eines anderen Segments zurückgeführt.

Mit Positionswechsel der Verzurrmittel sind damit unterschiedliche Belegungen der Ausnehmungen bzw. Ösen unterschiedlicher Bleche einer Flusssperre als auch deren Wechsel von einer Ausnehmung bzw. Öse eines Bleches zur Ausnehmung bzw. Öse eines anderen Bleches innerhalb der im Wesentlichen axial verlaufenden Flusssperre gemeint.

Jedes Segment weist im Prinzip schalenförmige Flusssperren auf, die in ihrer radialen Erstreckung nach außen hin abnehmen.

Erfindungsgemäß kommt nunmehr der Rotor dieser synchronen Reluktanzmaschine völlig ohne magnetisch leitfähige Stege im Bereich der Flusssperren aus, so dass erfindungsgemäß eine bessere magnetische Ausnutzung dieser synchronen Reluktanzmaschine vorliegt, was sich in einer höheren Energieeffizienz und Leistungsdichte dieser Reluktanzmaschine äußert.

Je nach Ausführung der Verzurrung und der dabei verwendeten Materialien der Verzurrmittel z.B. Fäden aus Kohlenstoffnanoröhrchen, Metalldrähte, Verbundfäden ist es gegebenenfalls möglich, höhere Drehzahlen im Betrieb der synchronen Reluktanzmaschine zu erreichen als mit der bisherigen konventionellen Bauformen.

Je nach Anzahl der Ausnehmungen oder Ösen innerhalb einer Flusssperre und/oder Segments lassen sich nunmehr die Kräfte auf mehrere Stellen innerhalb des Blechpakets verteilen, so dass auch insgesamt größere Kräfte, insbesondere Fliehkräfte aufgenommen werden können. Dies ermöglicht höhere Drehzahlen dieser synchronen Reluktanzmaschine, vor allem auch bei Achshöhen größer 150 mm.

Die Erfindung sowie weitere vorteilhafte Ausgestaltungen der Erfindung werden anhand mehrerer Ausführungsbeispiele näher beschrieben. Dabei zeigen:
- FIG 1: einen prinzipiellen Längsschnitt einer synchronen Reluktanzmaschine,
- FIG 2 und 3: Querschnitte des Rotors,
- FIG 4 bis 6: Anordnung von Blechen des Rotors,
- FIG 7: prinzipielle Herstellverfahren eines Rotors.

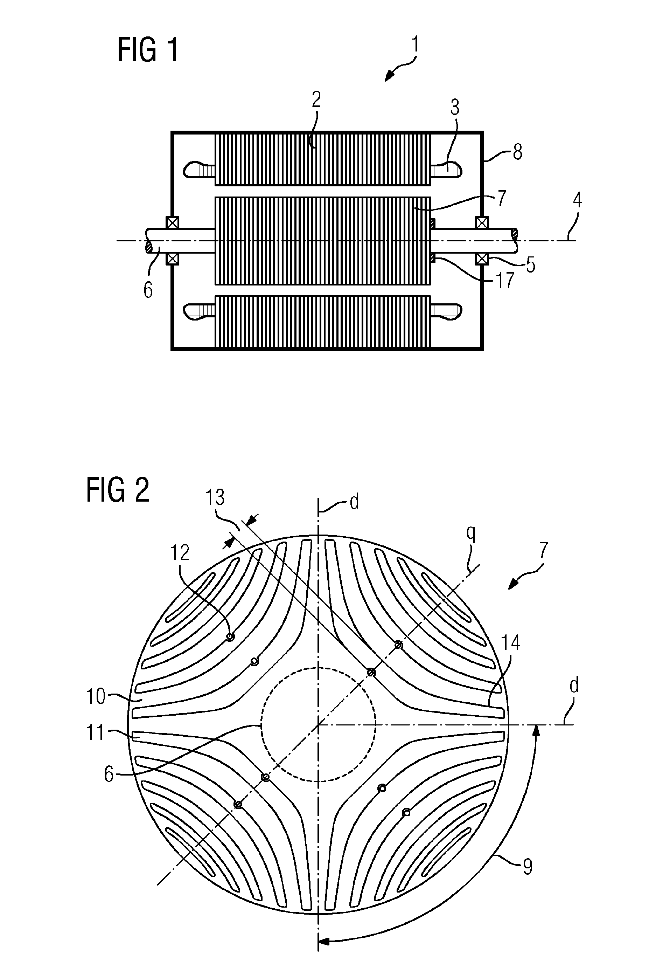

FIG 1 zeigt in einem prinzipiellen Längsschnitt eine synchrone Reluktanzmaschine 1, die einen Stator 2 aufweist, der in einem Gehäuse 8 positioniert ist. Das Gehäuse 8 hält über Lagerschilde Lager 5, die wiederum eine Welle 6 positionieren, die mit einem Rotor 7 drehfest verbunden ist. Die Drehung des Rotors 7 erfolgt um eine Achse 4. Der Stator 2 weist ein in nicht näher dargestellten Nuten positioniertes Wicklungssystem auf, das an den Stirnseiten des Stators 2 Wickelköpfe 3 ausbildet.

Über elektromagnetische Wechselwirkung des bestromten Stators 2 mit dem Rotor 7 ergibt sich eine Drehung des Rotors 7 um die Achse 4. Der Rotor 7 ist axial aus geschichteten Blechen aufgebaut, wobei an zumindest einer Stirnseite des Rotors 7 eine Vorrichtung 17 zur Fixierung und Spannen von in dieser Darstellung nicht näher bezeichneten Verzurrmitteln 16 vorgesehen ist.

FIG 2 zeigt im Querschnitt einen Rotor 7, der vierpolig aufgebaut ist mit seinen magnetischen Vorzugsachsen d. Die magnetische Vorzugsachse d ist die Achse mit dem vergleichsweise geringen magnetischen Widerstand, während die Achse q die Achse mit dem magnetisch hohen Widerstand bezeichnet. Der magnetisch hohe Widerstand in der q-Achse wird dadurch geschaffen, dass Flusssperren 11 schalenförmig angeordnet sind und so, in diesem Fall einen vierpoligen Rotor ausbilden. Die Flussleitabschnitte 10 sind dabei so ausgestattet, dass sie den magnetischen Fluss einen möglichst geringen Widerstand entgegensetzen.

Um nunmehr die Bleche dieses Rotors 7 zu paketieren, aber vor allem im Betrieb der synchronen Reluktanzmaschine gegen die Fliehkraftwirkungen zu sichern, wird erfindungsgemäß vorgeschlagen, eine Vielzahl von Blechen mit Ausnehmungen, in diesem Fall Ösen an einzelnen Kanten der Flusssperren 11 auszustatten. Dabei wird mittels Verzurrmitteln 16, die z.B. als Draht oder Verbundstoffe ausgeführt sein können, und über eine Vorrichtung 17 eine Fixierung und Verspannung des Blechpakets an einer Stirnseite des Rotors 7 geschaffen. Die Ausnehmung bzw. Ösen 12 sind dabei insbesondere an der Kante der Flusssperren 11 angeordnet, um dem magnetischen Fluss der Flussleitabschnitte 10 keinen zusätzlichen Widerstand entgegenzustellen.

Eine Vorrichtung 17 zur Fixierung und/oder Spannen der Verzurrmittel 16 an zumindest einer Stirnseite des Rotors 7 kann dabei eine Spannschraube an einer Endplatte des Rotors 7 sein, wie sie z.B. bei Saiteninstrumenten bekannt ist.

Um eine Fixierung und/oder Spannen der Verzurrmittel 16 an zumindest einer Stirnseite des Rotors 7 zu erhalten, kann das Verzurrmittel 16 auch mittels einer Drahtwirbelzange verdrillt werden.

Um eine Fixierung und/oder Spannen der Verzurrmittel 16 an zumindest einer Stirnseite des Rotors 7 zu erhalten, kann das Verzurrmittel 16, insbesondere metallische Drähte oder Drähte aus Verbundstoffen an zumindest einer Klemmvorrichtung "abgelegt" werden.

Eine Fixierung und/oder Spannen eines Verzurrmittels 16 an zumindest einer Stirnseite des Rotors 7 kann auch durch Nutzung eines Verzurrbandes oder -drahtes geschehen, das beispielsweise der während der Fixierung und/oder Spannens thermisch gedehnt wurde und sich anschließend zusammenzieht. Es liegt somit ein thermischer Schrumpfprozess des Verzurrmittels 16 vor.

In der Darstellung nach FIG 2 ist die Welle 6 nicht explizit bezeichnet, sondern nur lediglich durch eine gestrichelte Welle angedeutet. D.h. diese Blechschnitte können sowohl mit einer Wellenbohrung ausgestattet sein, wobei nach Fixierung des Blechpakets der Rotor 7 mit einer Welle 6 drehfest verbunden wird oder aber ein Blechpaket kann derart gestanzt werden, dass bereits der mittlere Teil des Blechs als Wellenersatz dient, der beispielsweise nach einem Anflanschen an besondere Arbeitsmaschinen zu deren Antrieb geeignet ist.

Die Ausnehmungen bzw. Ösen 12 sind bei den radial inneren Flusssperren 11 im Bereich der q-Achse vorgesehen. Weitere Positionierung der bzw. von mehreren Ausnehmungen bzw. Ösen 12 innerhalb einer Flusssperre 11 - symmetrisch oder asymmetrisch zur q-Achse - sind vorstellbar und sind u.a. den folgenden Figuren zu entnehmen.

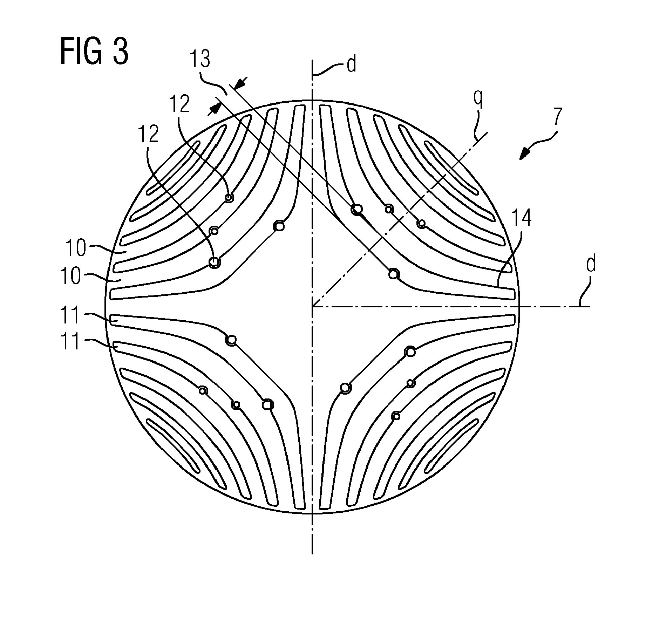

In einer weiteren Ausführungsform zeigt FIG 3 ebenfalls einen vierpoligen Rotor 7, der Ösen 12 aufweist, wobei jede Flusssperre 11, die radial weiter innen angeordnet ist, zwei Ösen aufweist, die vorzugsweise auch unterschiedliche Durchmesser aufweisen können. D.h. je größer die radiale Dicke 13 der Flusssperre desto größer die Ausnehmung bzw. Öse 12 im Durchmesser.

Die Ösen 12 sind gemäß FIG 3 ebenfalls an den Kanten 14 der Flusssperren 11 angeordnet. Eine Möglichkeit, ein derartiges Blechpaket nunmehr herzustellen ist beispielsweise Bleche nach FIG 2 oder FIG 3 axial aneinander zu schichten, wobei dabei alle Bleche den gleichen identischen Blechschnitt aufweisen. D.h. im Umkehrschluss die Verzurrelemente 16 verlaufen im Wesentlichen achsparallel und/oder die Ösen 12 bzw. Ausnehmungen fluchten, zumindest abschnittsweise axial. Eine Verspannung und/oder Fixierung der Verzurrelemente 16 erfolgt, wie oben beschrieben durch eine Vorrichtung an zumindest einer Stirnseite des Rotors 7.

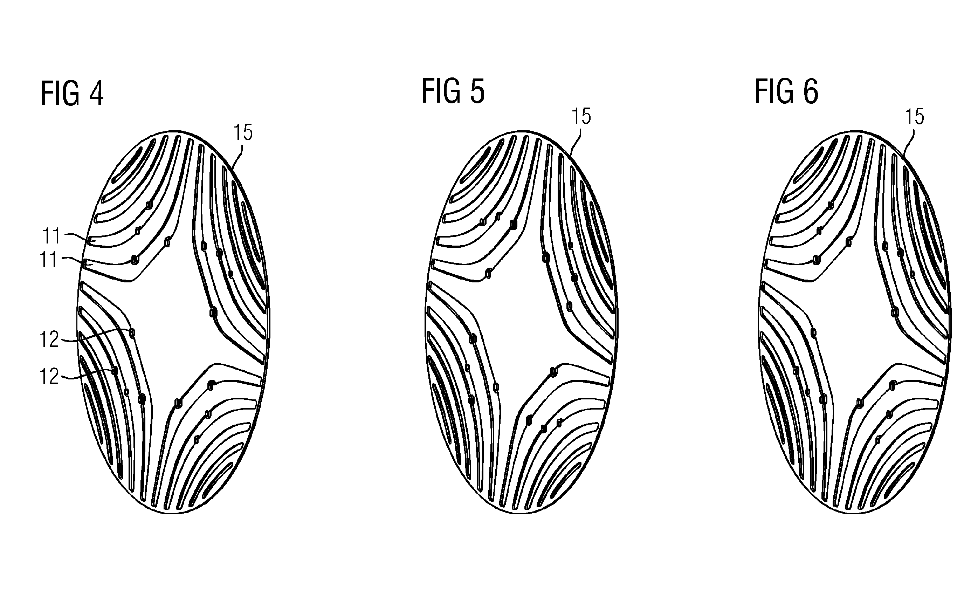

Um nunmehr eine zusätzliche Verspannung des Blechpaketes des Rotors 7 zu erhalten, kann bei identischem Blechschnitt und bei zumindest zwei Ösen pro Flusssperre folgendermaßen verfahren werden: Es wird nach einer vorgegebenen Anzahl von Blechschnitten gemäß FIG 4 ein oder mehrere Bleche ohne Ausnehmung oder Ösen oder Bleche mit nicht belegten Ausnehmungen oder Ösen 12 axial dazwischengeschaltet, um anschließend mit Blechen gemäß FIG 5 fortzufahren. Durch die Positionierung der Ösen 12 erkennt man nun, dass sich ausgehend von den Blechen gemäß FIG 4, eine Art Traversierung zu den Ösen 12 der Bleche gemäß FIG 5 und eine zusätzliche Verspannung einstellt.

Das normale Zwischenblech (ohne Ausnehmung oder Ösen) oder zwischengeschaltete Bleche (mit nicht belegten Ausnehmungen oder Ösen 12) muss aus dem Grund axial zwischengeschaltet werden, damit die zusätzlichen Biegeradien der Verzurrmittel 16 bei einem Wechsel der Position dieser Verzurrmittel 16 innerhalb einer Flusssperre 11 von einer Ausnehmungen oder Öse zur anderen Ausnehmung oder Öse 12 nicht unterschritten werden.

Nach einem oder mehreren dieser Zwischenbleche zwischen den Blechen nach FIG 5 und FIG 6 sind wieder ein oder mehrere der Bleche gemäß FIG 6 vorgesehen.

Damit wird eine Verzurrung wie bei Lasttraversen erreicht, was eine zusätzliche Festigkeit und eine erhöhte Fliehkraftbeanspruchung des Blechpakets des Rotors 7 gewährleistet.

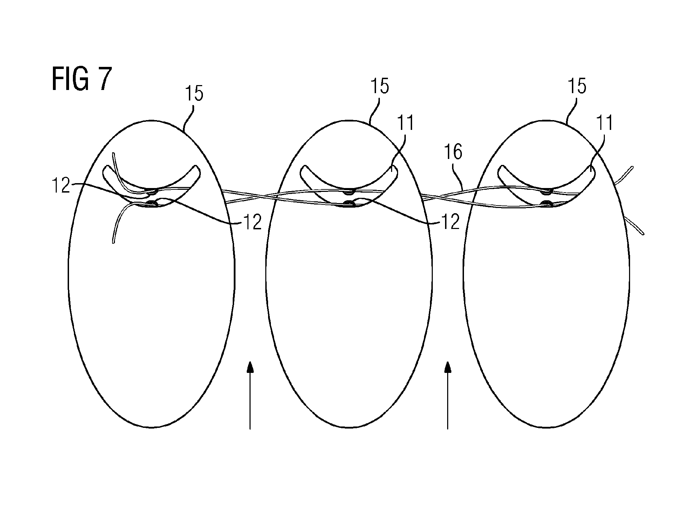

Auch bei Flusssperren 11 mit zwei gegenüberliegenden Ösen 12 innerhalb einer Flusssperre 11 gemäß FIG 7 lässt sich eine Verzurrung über eine Verdrillung bzw. Positionswechsel der Verzurrmittel 16 an oder im Bereich des Zwischenbleches oder der Zwischenbleche erreichen, deren axiale Positionierung durch Pfeile angedeutet ist. Auch dabei wird ein kompaktes Herstellverfahren eines Rotors gewährleistet.

Die Zwischenbleche sind somit entweder Bleche ohne Ausnehmung oder Ösen oder aber Bleche mit Ausnehmungen oder Ösen, wobei diese dann nicht durch das oder die Verzurrmittel 16 belegt sind.

Die Verdrillung oder der Wechsel der Position der Verzurrmittel 16 erfolgt vorzugsweise innerhalb der jeweiligen Flusssperre.

Die erfindungsgemäße Verzurrung durch die Verzurrmittel 16 vorzugsweise innerhalb der jeweiligen Flusssperre 11 dient in erster Linie der Aufnahme der Fliehkräfte, aber auch der Paketierung des Blechpaketes des Rotors 7. Die Paketierung wird außerdem durch eine Backlackbeschichtung und/oder eine axiale Schweißnaht an der äußeren Mantelfläche des Blechpaketes des Rotors 7 und/oder durch Stanzpaketieren des Rotors 7 erreicht.

Erfindungsgemäß sind somit die Rotoren 7 der synchronen Reluktanzmaschine vier-, sechs-, oder achtpolig etc. ausgeführt. Die Flusssperren 11 sind als Ausstanzungen im jeweiligen Blech ausgebildet und verlaufen im Wesentlichen axial innerhalb des Blechpakets des Rotors 7. Die Flusssperren 11 sind insbesondere schalenförmig innerhalb eines Segments 9, also zwischen zwei d-Achsen z.B. gemäß FIG 2 angeordnet. Die Verzurrmittel 16 verlaufen innerhalb einer Flusssperre 11. Wechsel in eine andere Flusssperre 11 des gleichen Segments 9 oder in eine andere Flusssperre eines anderen Segments 9 sind nur über Umlenkungen an der Stirnseite des Rotors 7 möglich.

Ein Wechsel eines Verzurrmittels 16 in eine andere Flusssperre des gleichen oder eines anderen Segments 9 wären auch möglich falls das Blechpaket des Rotors 7 axial in mehrere axiale Teilblechpakete unterteilt wäre, die durch einen umlaufenden Schlitz voneinander getrennt sind. Der Wechsel erfolgt dann im Schlitz.

Nicht jede Flusssperre 11 ist mit Verzurrmitteln 16 versehen. Ebenso ist nicht jede Flusssperre 11 mit Ausnehmungen bzw. Ösen 12 ausgestattet. Vor allem die Flusssperren 11 in der Nähe der Achse 4 sind mit Verzurrmitteln 16 versehen. Pro belegter Flusssperre 11 können ein oder mehrere - auch unterschiedliche - Verzurrmittel 16 vorgesehen werden. Dies hängt vom Aufstellungsort der synchronen Reluktanzmaschine (aggressive Umgebung) als auch von den erwarteten Fliehkraftbeanspruchungen ab.

Um eine zusätzliche Fixierung zu erhalten, können die Bleche des gesamten Blechpaketes des Rotors 7 mit einer Backlackbeschichtung ausgeführt werden. Es ist außerdem oder ergänzend möglich am Ende der Herstellung des Rotors 7 an einer oder mehreren Stellen des im Wesentlichen zylindrischen Blechpaktes des Rotors 7 zumindest eine axiale Schweißnaht an der äußeren Mantelfläche anzubringen und/oder das Blechpaket des Rotors 7 durch Stanzpaketieren zu erhalten.

Eine derartige synchrone Reluktanzmaschine wird vorzugsweise bei ähnlichen Anwendungsgebieten wie Käfigläufer von Asynchronmotoren eingesetzt, d.h. wie bei Kompressorantrieben, Lüftern, Werkzeugspindeln von Werkzeugmaschinen, Sägeantrieben, Zentrifugen oder Verdichterantrieben. Durch die erfindungsgemäße Ausgestaltung der synchronen Reluktanzmaschine lassen nunmehr wesentlich höhere Drehzahlen auch bei größeren Achshöhen realisieren.

Der erfindungsgemäße Aufbau eignet sich demnach insbesondere für synchrone Reluktanzmaschinen mit Achshöhen größer gleich 150 mm.

## Patentansprüche

1. Rotor (7) einer synchronen Reluktanzmaschine (1) mit einem axial laminierten Blechpaket, wobei jedes Blech dieses Blechpaket eine anisotrope Struktur mit Ausbildung von Flusssperren (11) und Flussleitabschnitten (10) bildet, wobei sich in Umfangsrichtung betrachtet magnetische Vorzugsrichtungen, d.h. Richtungen mit geringem magnetischen Widerstand (d-Achsen) mit Richtungen abwechseln, die einen vergleichsweise hohen magnetischen Widerstand (q-Achsen) aufweisen, wobei zumindest einige Bleche zusätzliche Ausnehmungen (12) aufweisen um über geeignete flexible Verzurrmittel (16) die Fliehkraftbeanspruchungen im Betrieb der synchronen Reluktanzmaschine aufzunehmen.

2. Rotor (7) nach Anspruch 1, **dadurch gekennzeichnet , dass** sich die Ausnehmungen (12) im Bereich der Flusssperren (11), insbesondere an den Kanten (14) der Flusssperren (11) befinden.

3. Rotor (7) nach Anspruch 1 oder 2, **dadurch ge**- **kennzeichnet** , dass die Ausnehmungen (12) wannenförmig oder ösenartig ausgebildet sind.

4. Rotor (7) nach einem der vorhergehenden Ansprüche, **dadurch gekennzeichnet, dass** als Verzurrmittel (16) Drähte aus Metall oder Verbundstoffe vorgesehen sind.

5. Rotor (7) nach einem der vorhergehenden Ansprüche, **dadurch gekennzeichnet , dass** die Ausnehmungen (12) der Bleche axial fluchtend angeordnet sind.

6. Rotor (7) nach einem der vorhergehenden Ansprüche, **dadurch gekennzeichnet , dass** die Ausnehmungen (12) innerhalb einer Flusssperre (11) an unterschiedlichen Stellen angeordnet sind, wobei dann ein Zwischenblech vorgesehen ist, das einen Wechsel innerhalb dieser Flusssperre (11) von einer Ausnehmung (12) an einer Stelle, auf eine andere Ausnehmung (12) an anderer Stelle ermöglicht.

7. Rotor (7) nach einem der vorhergehenden Ansprüche, **dadurch gekennzeichnet , dass** die Anzahl der Ausnehmungen (12) pro Flusssperre (11) radial von außen nach innen zunimmt.

8. Rotor (7) nach einem der vorhergehenden Ansprüche, **dadurch gekennzeichnet , dass** pro Flusssperre (11) mindestens eine Ausnehmung (12) vorgesehen ist.

9. Verfahren zur Herstellung eines Rotors (7) einer synchronen Reluktanzmaschine (1) mit
- einem axial laminierten Blechpaket, wobei jedes Blech dieses Blechpaket eine anisotrope Struktur mit Ausbildung von Flusssperren (11) und Flussleitabschnitten (10) bildet, wobei sich in Umfangsrichtung betrachtet magnetische Vorzugsrichtungen, d.h. Richtungen mit geringem magnetischen Widerstand (d-Achsen) mit Richtungen abwechseln, die einen vergleichsweise hohen magnetischen Widerstand (q-Achsen) aufweisen, wobei zumindest einige Bleche zusätzliche Ausnehmungen (12) aufweisen um über geeignete flexible Verzurrmittel die Fliehkraftbeanspruchungen im Betrieb der synchronen Reluktanzmaschine aufzunehmen, durch folgende Schritte:
- Bereitstellen von Blechen mittels Stanzen oder Lasern,
- Paketieren dieser Bleche bei gleichzeitiger oder zeitlich nachgeschaltetem Einfädeln der Verzurrmittel (16) in die vorgegebenen Ausnehmungen der Flusssperren (11),
- Fixieren und Spannen der Verzurrmittel (16), insbesondere der Drähte aus Metall oder Verbundwerkstoffen zumindest an einer Stirnseite des Rotors (7).

10. Verfahren nach Anspruch 9, **dadurch gekennzeichnet , dass** die Bleche mit einer Backlackbeschichtung versehen sind, die eine zusätzliche Fixierung bewirkt.

11. Verfahren nach Anspruch 9 oder 10, **dadurh gekennzeichnet**, dass das Blechpaket an seiner äußeren Mantelfläche axial mit einer Schweißnaht versehen und/oder stanzpaketiert wird.

12. Synchrone Reluktanzmaschine (1) mit einem Rotor (7) nach einem der Ansprüche 1 bis 7.

13. Verwendung eines Reluktanzmotors (1) nach Anspruch 12, bei Kompressorantrieben, Lüftern, Werkzeugspindeln von Werkzeugmaschinen, Sägeantrieben, Zentrifugen oder Verdichterantrieben.
